(19) **Europäisches Patentamt European Patent Office Office européen des brevets**

(11) **EP 1 133 856 B1**

(12) **FASCICULE DE BREVET EUROPEEN**

(45) Date de publication et mention
de la délivrance du brevet:
**30.07.2008 Bulletin 2008/31**

(21) Numéro de dépôt: **99956131.9**

(22) Date de dépôt: **24.11.1999**

(51) Int Cl.:
***H04L 27/233*** (2006.01)

(86) Numéro de dépôt international:
**PCT/FR1999/002890**

(87) Numéro de publication internationale:
**WO 2000/031936 (02.06.2000 Gazette 2000/22)**

(54) **DEMODULATEUR NUMERIQUE I/Q EN TECHNOLOGIE DE CIRCUIT INTEGRE**

DIGITALER I/Q-DEMODULATOR IN INTEGRIERTER SCHALTKREISTECHNIK

I/Q DIGITAL DEMODULATOR IN INTEGRATED CIRCUIT TECHNOLOGY

(84) Etats contractants désignés:
**DE FR GB IT NL**

(30) Priorité: **24.11.1998 FR 9814789**

(43) Date de publication de la demande:
**19.09.2001 Bulletin 2001/38**

(73) Titulaire: **E2V Semiconductors
38120 Saint Egreve (FR)**

(72) Inventeurs:
• **SIMONY, Laurent,
Thomson-CSF
94117 Arcueil Cedex (FR)**
• **WINGENDER, Marc,
Thomson-CSF
94117 Arcueil Cedex (FR)**
• **VINCENT, Pierre,
Thomson-CSF
94117 Arcueil Cedex (FR)**

(74) Mandataire: **Guérin, Michel et al
Marks & Clerk France
31-33 Avenue Aristide Briand
94117 Arcueil Cédex (FR)**

(56) Documents cités:
EP-A- 0 291 979         EP-A- 0 690 566
EP-A- 0 813 300         WO-A-98/44690
FR-A- 2 571 194         US-A- 4 606 051
US-A- 5 504 455

**Description**

L'invention concerne les démodulateurs en fréquence intermédiaire (FI) délivrant les composantes en phase I et en quadrature Q codées en numérique, utilisées pour la démodulation des signaux modulés numériquement en phase ou en fréquence.

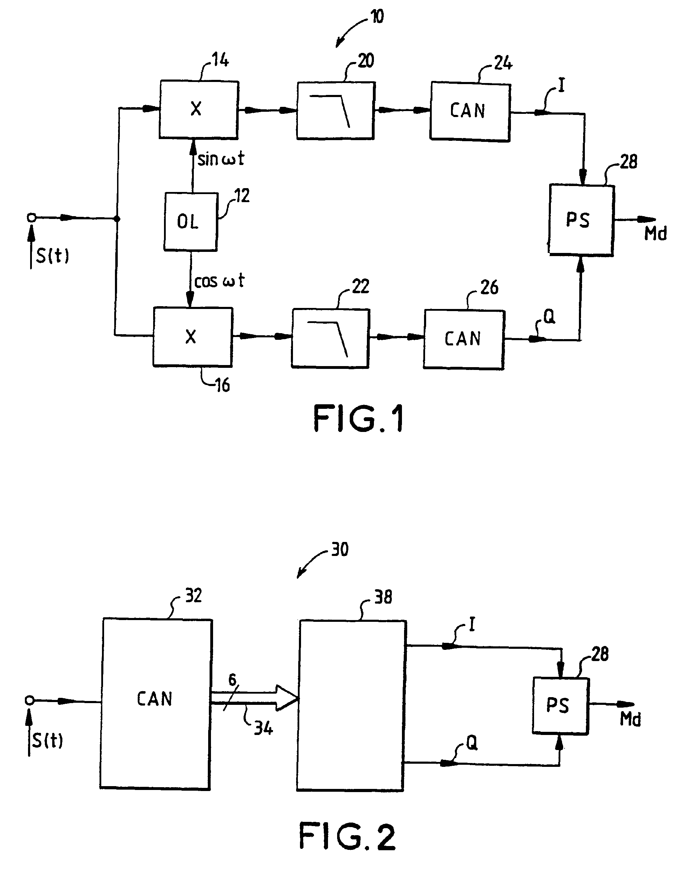

Le procédé utilisé classiquement pour démoduler un signal S(t) consiste à multiplier simultanément le signal S(t) par deux sinusoïdes en quadrature à la fréquence intermédiaire, respectivement $\sin\omega t$ et $\cos\omega t$, (où : $\omega = 2.\pi$. FI, FI étant la fréquence intermédiaire), la fréquence intermédiaire étant fournie par un oscillateur local 12 (voir la figure 1, représentant un synoptique d'un tel procédé de démodulation).

Un premier multiplicateur 14 et un second multiplicateur 16 sont attaqués d'une part par le signal d'entrée S (t) et d'autre part respectivement pour chaque multiplicateur par $\sin\omega t$ et par $\cos\omega t$. Les résultantes $S(t).\sin\omega t$ et $S(t).\cos\omega t$, respectivement à la sortie de chacun des multiplicateurs 14 et 16, doivent être filtrées chacune par un filtre passe-bas (20, 22) pour éliminer la composante haute fréquence, puis être numérisées simultanément. Cette approche est réalisable en circuit intégré mais nécessite l'emploi de deux convertisseurs 24 et 26 en sortie des filtres 20 et 22 pour établir des valeurs numériques I et Q transmises à un processeur de signal 28 qui fournit le signal numérique démodulé Md. De plus, l'emploi de deux voies analogiques distinctes conduit à une limitation due à la précision de leur appariement en phase et en amplitude.

Un autre procédé, représenté par le synoptique de la figure 2 ( et présenté par le brevet FR 2 615 675), effectue la démodulation I/Q à partir d'une numérisation directe du signal S(t) par un convertisseur 32, en calculant les composantes I et Q sous forme de sommes pondérées des échantillons numériques de S(t). La fréquence d'échantillonnage doit être au moins égale à quatre fois la fréquence du signal d'entrée pour pouvoir obtenir à la démodulation l'information de phase. La sortie numérique 34 du convertisseur 32 fournit les échantillons numérisés à un calculateur 38 (microprocesseur) qui calcule les sommes pondérées I et Q.

Cette méthode n'a recours qu'à un seul convertisseur au lieu de deux pour la méthode classique, et élimine tous les problèmes d'appariement de phase et d'amplitude, car I et Q sont calculés à partir des mêmes échantillons, de manière numérique. Mais le mode de réalisation de cette méthode (décrite dans le brevet FR 2 707 119) est insuffisant dans le cas de traitements à débits élevés, de par l'utilisation du microprocesseur. On souhaite en effet traiter des données avec des débits de 50 MHz ou plus.

Le brevet US-A-5 504 455 décrit un démodulateur numérique comportant un unique convertisseur analogique/numérique suivi de filtres FIR symétriques pour chacune des voies en phase et en quadrature et d'une décimation par 4.

Dans le but de pallier les inconvénients de l'art antérieur, l'invention propose un démodulateur numérique réalisé sous forme de circuit intégré peu consommant et permettant de travailler avec une fréquence intermédiaire de 70 MHz.

Le principe mis en oeuvre calcule les paires analytiques I,Q en réalisant des sommes pondérées $I=\Sigma a_i X_i$ et $Q=\Sigma b_i X_i$ où les $X_i$ sont les échantillons prélevés sur le signal et $a_i$ et $b_i$ sont les coefficients, l'indice i variant de 1 à N. Pour le calcul d'une paire I,Q les mêmes échantillons doivent être utilisés. Pour satisfaire au théorème de Shannon, les paires I,Q doivent être calculées à une fréquence au moins égale à deux fois la fréquence modulante maximale du signal à démoduler.

Le brevet FR 2 707 119 explique comment calculer les coefficients $a_i$ et $b_i$ et en fonction du nombre N de coefficients, avec la condition que ces coefficients (positifs ou négatifs) doivent être des nombres entiers afin de faciliter la réalisation du démodulateur.

Le cas particulier à quatre coefficients permet d'obtenir un rapport signal/bruit suffisant (24 dB avec +/-50% de bande relative par rapport à la fréquence intermédiaire FI) pour démoduler des signaux numériques. Les coefficients de pondération a utiliser dans ce cas sont :

- pour la sortie I : -1, +3, +3, -1 ;
- pour la sortie Q : +1 +3, -3, -1.

Dans ce cas particulier, il n'y a donc que deux valeurs absolues distinctes de coefficients, ce qui contribue à simplifier la mise en oeuvre.

Par ailleurs la numérisation est réalisée sur 6 bits, ce qui n'est pas limitant pour le rapport signal à bruit.

Enfin, du point de vue de la réalisation en circuit intégré, le cas à quatre coefficients constitue une étape importante car il couvre comme indiqué la plupart des besoins pour la transmission des informations numériques.

Dans le but de pallier les inconvénients de l'art antérieur, l'invention propose un démodulateur numérique I/Q, comportant un convertisseur analogique numérique fournissant périodiquement n valeurs numériques X (X1, X2, X3, X4) représentant des échantillons successifs d'un signal analogique à démoduler, le démodulateur effectuant à partir des n valeurs de X, deux sommes pondérées utilisant chacune au moins deux coefficients de pondération k1 et k2, dont l'un au moins n'est pas une puissance de deux, le démodulateur étant caractérisé en ce qu'il comprend au moins deux sections de mémoire morte et un décodeur d'adresses faisant correspondre à chaque valeur numérique possible de X en sortie du convertisseur analogique numérique une zone de mémoire contenant une valeur k1.X dans la première section de mémoire et une valeur k2.X dans la deuxième section de mémoire, des moyens de stockage des n valeurs extraites successivement de la première et de la deuxième sections de mémoire au cours de n opérations d'échantillonnage successives, et des moyens d'addition et de soustraction couplés aux moyens de stockage pour fournir les sommes pondérées.

Le démodulateur selon l'invention comporte donc une structure de mémorisation de type mémoire morte ayant autant de sections de mémoire morte qu'il y a des valeurs absolues différentes de coefficients non égaux à une puissance de deux (autre que 2°). Ceci permet de disposer instantanément du résultat de la pondération sans avoir recours à un processus de calcul. Par exemple dans le cas du démodulateur I/Q à quatre échantillons (n=4) et ayant pour coefficients les nombres dont les valeurs absolues sont 1 et 3, la structure de mémorisation comportera deux sections de mémoire morte, une première section de mémoire morte comportant les valeurs numériques des échantillons pondérés par le coefficient de valeur absolue k1=1 et une seconde section de mémoire morte comportant les valeurs numériques des échantillons pondérés par le coefficient de valeur absolue k2=3. Dans le cas d'un coefficient égal à une puissance entière de deux, un décalage dans la lecture des bits du mot numérique sera suffisant pour effectuer la multiplication d'un échantillon par ce coefficient.

Dans une réalisation préférée, les sections de mémoire morte sont en structure différentielle comportant des sorties différentielles. La structure (ou la logique différentielle) permet de disposer instantanément d'un bit et de son complément, puisque aucune porte supplémentaire n'est nécessaire, il suffit de croiser les fils d'une sortie binaire différentielle.

De la même façon, les moyens de stockage des n opérations successives d'échantillonnage comportent des registres en logique différentielle.

La structure d'une réalisation du démodulateur I/Q selon l'invention, sera essentiellement basée sur l'utilisation des éléments suivants :

- un convertisseur analogique-numérique de type « flash » ;
- des mémoires mortes en structure différentielle ;
- une logique différentielle;
- un codage par complément à deux ;
- des moyens d'addition et de soustraction comportant des additionneurs à logique multiniveaux pour réaliser des sommes ;
- une technologie par exemple bipolaire NPN qui permet de réaliser ces éléments.

Le codage par complément à deux permet, dans le cas où certains coefficients sont opposés entre eux, de disposer facilement de la valeur opposée. A cet effet, sans faire de calcul supplémentaire, on inverse les bits par croisement des fils, et on ajoute 1. Ceci se fait en câblant au niveau logique « 1 » l'entrée retenue de l'additionneur. Ceci est important car le choix optimal des composants fait apparaître que le calcul de Q se fait avec des coefficients deux à deux opposés.

Les additionneurs multiniveaux actuels, permettent d'obtenir la cadence nécessaire de fonctionnement pour une consommation optimisée.

La technologie NPN permet de réaliser toutes les fonctions nécessaires avec la performance voulue, et rend de ce fait possible une réalisation monolithique.

Les caractéristiques et avantages de l'invention apparaîtront à la lecture de la description détaillée qui en est faite en référence aux figures dans lesquelles :

- la figure 1, déjà décrite montre un démodulateur I/Q analogique selon l'art antérieur comportant des sorties numérisées.
- la figure 2, déjà décrite montre un autre démodulateur numérique I/Q selon l'art antérieur.
- la figure 3, montre un exemple de réalisation d'un démodulateur numérique I/Q selon l'invention.

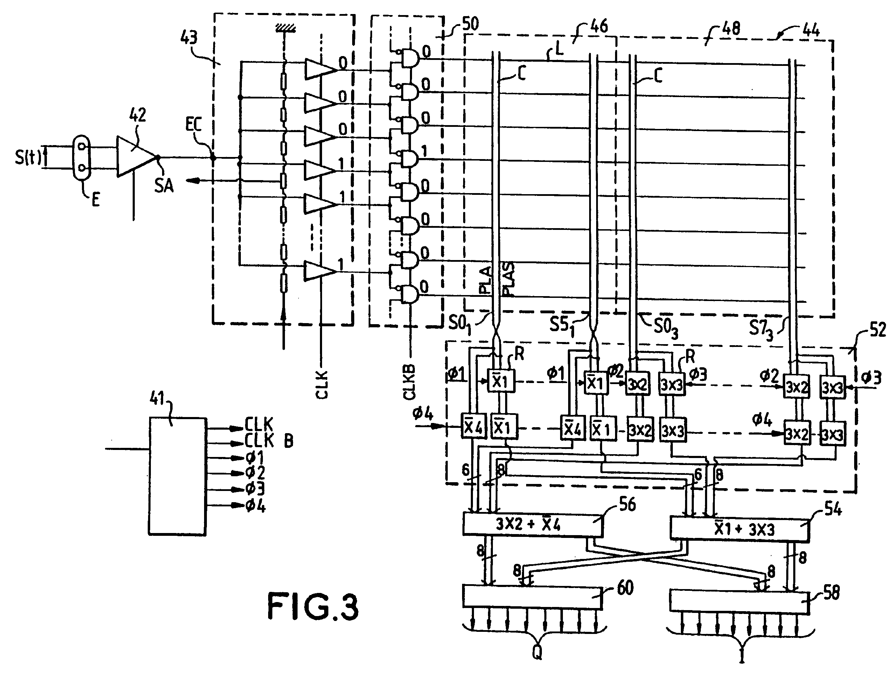

Le synoptique de la figure 3 montre l'architecture d'un démodulateur I/Q selon l'invention comportant une entrée E à laquelle on applique un signal d'entrée S(t) en fréquence intermédiaire (FI). Le signal d'entrée est numérisé à une fréquence d'échantillonnage égal à quatre fois la FI.

Dans la suite on décrira une réalisation dans laquelle les coefficients de pondération sont,
pour I : -1, +3, +3, -1 et
pour Q : +1, +3, -3, -1

Les coefficients k1 et k2 utilisés seront donc respectivement 1 et 3. L'invention est cependant applicable à un autre nombre de coefficients et à d'autres valeurs de ces coefficients.

Une horloge 41 fournit des signaux de séquencement des différents éléments du démodulateur.

Le démodulateur comporte un amplificateur 42 d'entrée fonctionnant en large bande, fournissant à une sortie SA un signal adapté en amplitude et en mode commun, à l'entrée EC d'un convertisseur analogique numérique 43, à $2^p$ niveaux, «p» étant par exemple égal à 6. Ce type de convertisseur analogique numérique (CAN) appelé communément de type « flash », permet d'obtenir en un coup d'horloge la valeur numérique de l'échantillon du signal d'entrée.

Une structure de mémorisation différentielle 44 ordonnée en lignes L et en colonnes C, comporte une première section de mémoire morte 46 à six bits et une seconde section de mémoire morte 48 à huit bits.

En effet, dans cet exemple on numérise sur six bits l'échantillon X. Ainsi, la première section de mémoire morte 46 contient les valeurs signées de X sur six bits : (de -32 = 111111 à +31 = 011111.

La seconde section de mémoire morte 48 contient les valeurs signées de 3X sur huit bits :

(de $-3 \times 32 = 96 = 10100000$ à $+3 \times 31 = 93 = 01011101$).

Le résultat des sommes devra quant à lui être codé sur 9 bits pour ne pas subir d'écrêtage, quelles que soient les valeurs numériques fournies par le convertisseur.

L'adressage des mémoires mortes est réalisé à partir du niveau échantillonné en sortie du convertisseur analogique numérique 43 faisant correspondre simultanément, par l'intermédiaire d'un décodeur à index mobile 50, à chaque niveau échantillonné, une même ligne L d'adressage dans la première section de mémoire morte 46 et dans la seconde section de mémoire morte 48.

I et Q sont calculés en effectuant la somme des quatre échantillons pondérés soit :

$$I = -X1 + 3.X2 + 3.X3 - X4$$

$$Q = X1 + 3.X2 - 3.X3 - X4$$

Il y a deux valeurs absolues distinctes de coefficients, $k1=1$ et $k2=3$, donc deux sections de mémoire morte 46 et 48 dans la structure de mémorisation différentielle 44.

La première section de mémoire morte 46 présente une sortie différentielle à six bits $S0_1$ à $S5_1$ et la seconde section de mémoire morte 48 présente une sortie différentielle à huit bits $S0_3$ à $S7_3$.

Les sorties différentielles $S0_1$ à $S5_1$ de la première section de mémoire morte 46 et les sorties $S0_3$ à $S7_3$ de la seconde section de mémoire morte 48 attaquent un aiguillage 52 comportant des registres R en logique différentielle afin de stocker temporairement les trois premières valeurs pondérées des échantillons.

Les registres différentiels R de l'aiguillage 52 assurent le stockage, au moment des coups d'horloge successifs $\phi1$ $\phi2$ $\phi3$ et $\phi4$, d'une part, des bits (ou leur complément) aux sorties de la première section de mémoire morte 46, des premier X1 et quatrième échantillons X4 pondérés par le coefficient 1 et d'autre part, des bits (ou leur complément) aux sorties de la seconde section de mémoire morte 48 des deuxième X2 et troisième échantillons X3, pondérés par le coefficient 3.

L'arrivée du quatrième échantillon X4 au coup d'horloge $\phi4$ déclenche le départ d'un processus d'addition effectué par quatre sections d'additionneurs fonctionnant en parallèle organisés en deux couches, l'un pour Q et l'autre pour I,

Dans le cas de cette réalisation à quatre coefficients, la structure a été optimisée par le fait que les sommes pondérées des échantillons pour I et pour Q peuvent être groupées de la manière suivante :

$$I = -X1 + 3.X2 + 3.X3 - X4 = (-X1 + 3.X3) + (3.X2 - X4) = A + B$$

$$Q = X1 + 3.X2 - 3.X3 - X4 = -(-X1 + 3.X3) + (3.X2 - X4) = -A + B$$

Ainsi le calcul de I et de Q se compose de deux étapes communes simples :

- Calculs simultanés de A = (-X1 + 3.X3) et de B = (3.X2 - X4) sur une première couche ;
- Calculs simultanés de I = A + B et de Q = -A + B sur une seconde couche.

La valeur opposée de A (signe -) s'obtient en croisant les fils de chaque bit en logique différentielle et en câblant à « 1 » l'entrée retenue de l'additionneur.

Chacun de ces calculs étant une addition de deux mots de huit bits, l'additionneur complet comporte quatre sections faisant chacune la somme de deux mots de huit bits. Les sorties I et Q doivent être délivrées sous neuf bits pour éviter tout écrêtage.

Une première couche d'additionneurs comporte un premier additionneur 54 effectuant la somme (-X1+3.X3) du premier terme A, et un deuxième additionneur 56 effectuant la somme (3.X2-X4) du second terme B.

Au quatrième coup d'horloge $\phi$4 les échantillons pondérés sont présentés simultanément avec leurs pondérations respectives aux entrées de la première couche d'additionneurs 54 et 56. Le premier additionneur 54 reçoit à ses entrées d'une part six bits correspondant à l'échantillon X1 pondéré par le coefficient k1=1 et d'autre part huit bits correspondant à l'échantillon X3 pondéré par le coefficient k2=3, le deuxième additionneur 56 recevant simultanément à ses entrées d'une part six bits correspondant à l'échantillon X4 pondéré par le coefficient k1=1 et d'autre part huit bits correspondant à l'échantillon X2 pondéré par le coefficient k2=3.

Une seconde couche d'additionneurs comporte un troisième additionneur 58 et un quatrième additionneur 60 effectuant respectivement la somme et la différence des termes.

Le troisième additionneur 58 effectue la somme du premier et du second terme soit (- X1 + 3.X3) + (3.X2 - X4) fournissant le signal I, le quatrième additionneur 60 effectuant la somme du premier terme opposé et du second terme, soit - (- X1 + 3.X3) + (3.X2 - X4), fournissant le signal Q. Le signe « - » du terme - (- X1 + 3.X3) est obtenu par complément des bits et ajout de 1.

Cette structure permet la réalisation sous forme d'un composant intégré des démodulateurs I/Q à haut débit.

La réalisation décrite n'est pas limitative. En effet les principes de l'invention peuvent être appliqués pour la réalisation de démodulateurs :

- utilisant davantage de coefficients, le nombre de sections de la mémoire pouvant être accru selon le nombre de coefficients pondérateurs à traiter simultanément ;
- traitant des FI plus élevées,
- numérisant sur un nombre de bits plus important.

Cependant, comme déjà précisé dans le texte, le cas à quatre coefficients permet de traiter une majorité d'applications.

## Revendications

1. Démodulateur numérique délivrant les composantes en phase(I) et en quadrature (Q) d'un signal modulé en phase ou en fréquence, comportant un convertisseur analogique numérique (43) fournissant périodiquement n valeurs numériques X (X1, X2, X3, X4) représentant des échantillons successif d'un signal analogique à démoduler, le démodulateur effectuant à partir des n valeurs de X, deux sommes pondérées calculées correspondant aux valeurs de I et Q utilisant chacune au moins deux coefficients de pondération k1 et k2, dont l'un au moins n'est pas une puissance de deux, le démodulateur étant **caractérisé en ce qu'**il comprend au moins deux sections de mémoire morte (46, 48) et un décodeur d'adresses faisant correspondre à chaque valeur numérique possible de X en sortie du convertisseur analogique numérique une zone de mémoire contenant une valeur k1.X dans la première section de mémoire et une valeur k2.X dans la deuxieme section de mémoire, des moyens de stockage (R) des n valeurs extraites successivement de la première (46) et de la deuxieme (48) section de mémoire au cours de n opérations d'échantillonnage successives, et des moyens d'addition (54, 56, 58, 60) et de soustraction couplés aux moyens de stockage pour fournir les sommes pondérées.

2. Démodulateur numérique I/Q, selon la revendications 1, **caractérisé en ce qu'**il comporte autant de sections de mémoire morte qu'il a des valeurs absolues différentes de coefficients non égaux à une puissance entière de deux.

3. Démodulateur numérique I/Q, selon l'une des revendications 1 ou 2, **caractérisé en ce que** les sections de mémoire morte (46, 48) comportent des sorties différentielles ($S0_1$ à $S5_1$, $S0_3$ à $S5_3$) permettant de disposer instantanément d'un bit et de son complément.

4. Démodulateur numérique I/Q, selon l'une des revendications 1 à 3, **caractérisé en ce que** le convertisseur analogique numérique (43) est de type « flash », à $2^p$ niveaux, permettant d'obtenir en un coup d'une horloge (41) de séquencement la valeur numérique d'un échantillon X du signal d'entrée.

5. Démodulateur numérique I/Q, selon l'une des revendications 1 à 4, **caractérisé en ce que** les moyens de stockage des n valeurs successives d'échantillonnage comportent des registrés (R) en logique différentielle afin de stocker temporairement les trois premières valeurs pondérées des échantillons

6. Démodulateur numérique I/Q, selon l'une des revendications 1 à 5, **caractérisé en ce que** les moyens d'addition et de soustraction permettant d'obtenir I et Q, comportent quatre sections d'additionneurs (54, 56, 58, 60) fonctionnant en parallèle organisés en deux couches, l'un pour Q et l'autre pour I,

7. Démodulateur numérique I/Q, selon l'une des revendications 1 à 6, **caractérisé en ce que** le nombre d'échantillons X (X1, X2, X3, X4) est égal à 4, le démodulateur comprenant deux mémoires mortes (46, 48), les deux sommes pondérées utilisant deux coefficients de pondération tels que le coefficient k1 est égal à 1 et le coefficient k2 est égal à 3.

8. Démodulateur numérique I/Q, selon la revendication 7, **caractérisé en ce que** les sommes pondérées des échantillons pour I et pour Q peuvent être groupées de la manière suivante :

$$I = - X1 + 3.X2 + 3.X3 - X4 = (- X1 + 3.X3) + (3.X2 - X4)$$

$$Q = X1 + 3.X2 - 3.X3 - X4 = -(- X1 + 3.X3) + (3.X2 - X4)$$

la somme de I et de Q comportant deux premiers termes opposés (- X1 + 3.X3) et - ( -X1 + 3.X3) et deux seconds termes identiques (3.X2 - X4), la valeur opposée (signe -) s'obtenant en croisant les fils de **chaque** bit en logique différentielle et en câblant à « 1 » l'entrée retenue de l'additionneur.

9. Démodulateur numérique I/Q, selon l'une des revendications 7 ou 8, **caractérisé en ce que** les sommes des différents termes permettant d'obtenir I et Q sont réalisées en deux couches d'additionneurs, une première couche comportant un premier additionneur 54 effectuant la somme (- X1 +3.X3) du premier terme, et un deuxième additionneur 56 effectuant la somme (3.X2 - X4) du second terme, une seconde couche d'additionneurs comportant un troisième additionneur 58 effectuant la somme du premier et du second terme soit (- X1 + 3.X3) + (3.X2 - X4) fournissant le signal I et un quatrième additionneur 60 effectuant la somme du premier terme opposé et du second terme soit -(-X1+3.X3)+(3.X2-X4) fournissant le signal Q, le signe « - » du terme - (- X1 + 3.X3) étant obtenu par complément des bits et ajout de 1.

10. Démodulateur numérique I/Q, selon l'une des revendications 1 à 9, **caractérisé en ce qu'**un adressage des mémoires mortes est réalisé à partir du niveau en sortie du convertisseur analogique numérique (43) faisant correspondre simultanément, par l'intermédiaire d'un décodeur à index mobile (50), à chaque niveau échantillonné, une même ligne (L) d'adressage dans la première mémoire morte (46) et dans la seconde mémoire morte (48).

## Claims

1. Digital demodulator delivering the in-phase (I) and in-quadrature (Q) components of a phase or frequency modulated signal, comprising an analogue-to-digital converter (43) periodically providing n numerical values X (X1, X2, X3, X4) representing successive samples of an analogue signal to be demodulated, the demodulator working out, from the n values of X, two weighted sums calculated corresponding to the values of I and Q, each using at least two weighting coefficients k1 and k2, at least one of which is not a power of two, the demodulator being **characterized in that** it comprises at least two sections of read-only memory (46, 48) and an address decoder mapping an area of memory containing a value k1.X in the first memory section and a value k2.X in the second memory section to each possible numerical value of X at the output of the analogue-to-digital converter, storage means (R) for storing the n values successively extracted from the first (46) and second (48) memory sections in the course of the n successive sampling operations, and means of addition (54, 56, 58, 60) and subtraction coupled to the storage means in order to provide the weighted sums.

2. Digital I/Q demodulator according to Claim 1, **characterized in that** it comprises as many sections of read-only memory as it has different absolute values of coefficients not equal to an integral power of two.

3. Digital I/Q demodulator according to one of Claims 1 or 2, **characterized in that** the sections of read-only memory (46, 48) comprise differential outputs ($S0_1$ to $S5_1$, $S0_3$ to $S5_3$) allowing instant availability of a bit and its complement.

4. Digital I/Q demodulator according to one of Claims 1 to 3, **characterized in that** the analogue-to-digital converter (43) is of the flash type with $2^P$ levels allowing the digital value of a sample X of the input signal to be obtained in one count of a sequencer clock (41).

5. Digital I/Q demodulator according to one of Claims 1 to 4, **characterized in that** the means for storing n successive sampling values comprise differential logic registers (R) in order to store temporarily the three first weighted values of the samples.

6. Digital I/Q demodulator according to one of Claims 1 to 5, **characterized in that** the means of addition and subtraction allowing I and Q to be obtained, comprise four sections of adders (54, 56, 58, 60) operating in parallel and organized in two layers, one for Q and the other for I.

7. Digital I/Q demodulator according to one of Claims 1 to 6, **characterized in that** the number of samples X (X1, X2, X3, X4) is equal to 4, the demodulator comprising two read-only memories (46, 48), the two weighted sums using two weighting coefficients such that the coefficient k1 is equal to 1 and the coefficient k2 is equal to 3.

8. Digital I/Q demodulator according to Claim 7, **characterized in that** the weighted sums of the samples for I and for Q may be grouped in the following manner:

$$I=-X1+3.X2+3.X3-X4=(-X1+3.X3)+(3.X2-X4)$$

$$Q=X1+3.X2-3.X3-X4=-(-X1+3.X3)+(3.X2-X4)$$

the sum of I and Q comprising two opposing first terms (-X1+3.X3) and -(-X1+3.X3) and two identical second terms (3.X2-X4), the opposing value (-sign) being obtained by crossing the wires of each differential logic bit and by wiring the retained input of the adder to "1 ".

9. Digital I/Q demodulator according to one of Claims 7 or 8, **characterized in that** the sums of the various terms allowing I and Q to be obtained are produced in two layers of adders, a first layer comprising a first adder 54 working out the sum (-X1+3.X3) from the first term and a second adder 56 working out the sum (3.X2-X4) from the second term, a second layer of adders comprising a third adder 58 working out the sum of the first and second terms, namely (-X1+3.X3)+(3.X2-X4), providing the signal I and a fourth adder 60 working out the sum of the opposing first term and the second term, namely -(-X1+3.X3)+(3.X2-X4), providing the signal Q, the "-" sign of the term -(-X1+3.X3) being obtained from the complement of the bits and adding 1.

10. Digital I/Q demodulator according to one of Claims 1 to 9, **characterized in that** the read-only memories are addressed on the basis of the level output by the analogue-to-digital converter (43), simultaneously matching, by means of a floating-point decoder (50), with each sampled level, any one same address line (L) in the first read-only memory (46) and in the second read-only memory (48).

**Patentansprüche**

1. Digitaler Demodulator, der die Inphasen- (I) und die Quadraturkomponente (Q) eines Signals liefert, das in Phase oder in Frequenz moduliert wurde, der einen Analog-Digital-Wandler (43) umfasst, der periodisch n Zahlenwerte X (X1, X2, X3, X4) liefert, die die aufeinander folgenden Abtastwerte eines zu demodulierenden analogen Signals darstellen, wobei der Demodulator aus den n Werten von X zwei ausgerechnete gewichtete Summen vornimmt, die den Werten von I und Q entsprechen, wobei jeweils mindestens zwei Gewichtungskoeffizienten k1 und k2 verwendet werden, von denen mindestens einer keine Potenz von zwei ist, wobei der Demodulator **dadurch gekennzeichnet ist, dass** er mindestens zwei Festspeicherbereiche (46, 48) und einen Adressendecoder, der jedem möglichen Zahlenwert von X am Ausgang des Analog-Digital-Wandlers ein Speicherfeld entsprechen lässt, das einen Wert k1.X im ersten Speicherbereich und einen Wert k2.X im zweiten Speicherbereich enthält, Mittel zum Speichern (R) von n Werten, die aufeinander folgend aus dem ersten (46) und dem zweiten (48) Speicherbereich während n aufeinander folgenden Abtastungsvorgängen extrahiert wurden, und Mittel zur Addition (54, 56, 58, 60) und Subtraktion, die mit den Speichermitteln gekoppelt sind, um die gewichteten Summen zu liefern, umfasst.

2. Digitaler I/Q-Demodulator nach Anspruch 1, **dadurch gekennzeichnet, dass** er ebenso viele Festspeicherbereiche wie unterschiedliche absolute Koeffizientenwerte, die nicht einer ganzzahligen Potenz von zwei entsprechen, umfasst.

3. Digitaler I/Q-Demodulator nach einem der Ansprüche 1 oder 2, **dadurch gekennzeichnet, dass** die Festspeicherbereiche (46, 48) differenzielle Ausgänge ($S0_1$ bis $S5_1$, $S0_3$ bis $S5_3$) umfassen, die ermöglichen, augenblicklich über ein Bit und sein Komplement zu verfügen.

4. Digitaler I/Q-Demodulator nach einem der Ansprüche 1 bis 3, **dadurch gekennzeichnet, dass** der Analog-Digital-Wandler (43) von der "Flash"-Art mit $2^P$ Ebenen ist, der ermöglicht, bei einem Schlag eines Sequenztaktgebers (41) den Zahlenwert einer Abtastung X des Eingangssignals zu erhalten.

5. Digitaler I/Q-Demodulator nach einem der Ansprüche 1 bis 4, **dadurch gekennzeichnet, dass** die Mittel zum Speichern von n aufeinander folgenden Abtastungswerten Register (R) in differenzieller Logik enthalten, um die drei ersten gewichteten Abtastungswerte zeitweise zu speichern.

6. Digitaler I/Q-Demodulator nach einem der Ansprüche 1 bis 5, **dadurch gekennzeichnet, dass** die Mittel zur Addition und Subtraktion, die ermöglichen, I und Q zu erhalten, vier parallel funktionierende Addiererbereiche (54, 56, 56, 60) umfassen, die in zwei Schichten, die eine für Q und die andere für I, organisiert sind.

7. Digitaler I/Q-Demodulator nach einem der Ansprüche 1 bis 6, **dadurch gekennzeichnet, dass** die Anzahl von Abtastungen X (X1, X2, X3, X4) gleich 4 ist, wobei der Demodulator zwei Festspeicher (46, 48) umfasst, wobei die zwei gewichteten Summen zwei Gewichtungskoeffizienten verwenden, wobei der Koeffizient k1 gleich 1 ist und der Koeffizient k2 gleich 3 ist.

8. Digitaler I/Q-Demodulator nach Anspruch 7, **dadurch gekennzeichnet, dass** die gewichteten Summen von Abtastungen für I und Q auf folgende Art und Weise gruppiert werden können:

$$I = -X1 + 3.X2 + 3.X3 - X4 = (-X1 + 3.X3) + (3.X2 - X4)$$

$$Q = X1 + 3.X2 - 3.X3 - X4 = -(-X1 + 3.X3) + (3.X2 - X4),$$

wobei die Summe von I und Q zwei erste entgegengesetzte Ausdrücke (-X1 + 3.X3) und -(-X1 + 3.X3) und zwei zweite identische Ausdrücke (3.X2 - X4) umfasst, wobei der entgegengesetzte Wert (Vorzeichen -) erhalten wird, indem die Ableitungen jedes Bits in differenzieller Logik gekreuzt werden und der Eingang, der vom Addierer gemerkt wurde, auf "1" gesetzt wird.

9. Digitaler I/Q-Demodulator nach einem der Ansprüche 7 oder 8, **dadurch gekennzeichnet, dass** die Summen der unterschiedlichen Ausdrücke, die ermöglichen, I und Q zu erhalten, in zwei Schichten von Addierern erstellt werden, wobei eine erste Stufe einen ersten Addierer 54, der die Summe (-X1 + 3.X3) des ersten Ausdrucks erstellt, und einen zweiten Addierer 56, der die Summe (3.X2 - X4) des zweiten Ausdrucks erstellt, umfasst, eine zweite Stufe von Addierern einen dritten Addierer 58, der die Summe des ersten und des zweiten Ausdrucks erstellt, nämlich (-X1 + 3.X3) + (3.X2 - X4), die das Signal I liefert, und einen vierten Addierer 60, der die Summe des ersten entgegengesetzten Ausdrucks und des zweiten Ausdrucks erstellt, nämlich -(-X1 + 3.X3) + (3.X2 - X4), die das Signal Q liefert, umfasst, wobei das Vorzeichen "-" des Ausdrucks -(-X1 + 3.X3) erhalten wird, indem Bits komplementiert werden und 1 dazugefügt wird.

10. Digitaler I/Q-Demodulator nach einem der Ansprüche 1 bis 9, **dadurch gekennzeichnet, dass** eine Adressierung von Festspeichern von der Stufe des Ausgangs des Analog-Digital-Wandlers (43) implementiert wird, der mittels eines Decoders mit beweglichem Verzeichnis (50) jeder abgetasteten Stufe ein und dieselbe Adressierungslinie (L) in dem ersten Festspeicher (46) und in dem zweiten Festspeicher (48) gleichzeitig entsprechen lässt.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2615675
- FR 2707119
- US 5504455 A